# EUROPEAN PATENT APPLICATION

(11) **EP 4 730 404 A1**
(43) Date of publication of application: **22.04.2026**
(21) Application number: 24852447.2
(22) Date of filing: 06.08.2024
(51) Int. Cl.: H01M 4/04, G01B 21/04

(54) **ROLL MAP CREATION SYSTEM**

(30) Priority: 08.08.2023 KR 20230103722
(71) Applicant: LG Energy Solution, Ltd., Seoul 07335 (KR)
(72) Inventor: LEE, Jae Hwan, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/095992
(87) International publication number: WO 2025/034094

(57) **Abstract**

A roll map creating system for a series of roll-to-roll processes in which an electrode unwound from an unwinder is wound in a rewinder, the roll map creating system includes a roll map creating device for creating a roll map for each process, the roll map being defined in a coordinate plane including a longitudinal direction axis of the electrode and a width direction axis of the electrode, and a position of the electrode in each process is represented by a coordinate value of the coordinate plane. The roll map creating device includes a roll map matching part for matching a coordinate value of the roll map of each of the processes prior to the final process with a coordinate value of the roll map of the final process, such that the electrode represented by the roll map of the final process is matched with the electrode represented by the roll map of each of the processes prior to the final process in a series of roll-to-roll processes.

## Description

### [Cross-Reference to Related Applications]

This application is a National Phase entry of International Application PCT/KR2024/095992 filed on August 6, 2024, which claims the benefit of priority based on Korean Patent Application No. 10-2023-0103722, filed on August 8, 2023, and the entire contents of the Korean patent applications are incorporated herein by reference.

### [Technical Field]

The present disclosure relates to a roll map creating system, and more specifically to a roll map creating system that ensures traceability of data related to electrodes, enabling accurate analysis and reducing work time.

### [Background]

With the technology development and increasing demand for mobile devices, the demand for secondary batteries is also increasing rapidly. Among them, lithium secondary batteries are widely used as an energy source for various mobile devices as well as various electronic products because of the high energy density, high operating voltage, and excellent preservation and lifespan characteristics.

An electrode manufacturing process for manufacturing an electrode of a lithium secondary battery includes a coating process for applying an active material and a predetermined insulating material to the surface of a metal electrode plate, which is a current collector, to form a positive electrode and a negative electrode, a rolling press process for rolling the coated electrode, a slitting process for cutting the rolled electrode according to a dimension, and a notching process for forming a tab on the electrode.

When the tabs are formed in the notching process, an electrode assembly is formed by interposing a separator between the positive electrode and the negative electrode, and then the secondary battery is formed by an assembly process in which the electrode assembly is stacked or folded, and packaged in a pouch or a can, etc., and injected with an electrolyte. The assembled secondary battery is then charged and discharged to become a secondary battery of the final finished product through an activation process that assigns battery characteristics.

Such a process can be performed through a series of roll-to-roll processes. However, since the starting point and/or surface of the electrode is reversed and the length changes, the coordinates of the roll maps created for each process may not match. Because of this, even if a roll map is created for each unit process, it may be difficult to trace the source of the problem compared to the roll map of the final surviving electrode.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

The present disclosure is directed to provide a roll map creating system that ensures traceability of data related to electrodes and enables accurate analysis and reduced work time.

The present disclosure, in order to solve the technical problem, provides a roll map creating system for a series of sequentially repeating roll-to-roll processes in which an electrode unwound from an unwinder is moved to be wound in a rewinder, wherein the roll map creating system includes a roll map creating device for creating a roll map for each process, the roll map being defined in a coordinate plane having two coordinate axes, a longitudinal direction axis of the electrode and a width direction axis of the electrode, and wherein a position of the electrode in each process can be represented by a coordinate value of the coordinate plane, and wherein the roll map creating device comprises a roll map matching part for matching a coordinate value of the roll map of each of the processes prior to the final process with a coordinate value of the roll map of the final process, such that the physical electrode represented by the roll map of the final process is matched with the physical electrode represented by the roll map of each of the processes prior to the final process in a series of roll-to-roll processes, wherein the roll map matching part is configured to reverse the coordinates in the width direction of the roll map of the second roll-to-roll process to match the coordinates in the width direction of the roll map of the first roll-to-roll process when the up and down directions in which the rewinder of the first roll-to-roll process winds the electrodes and the up and down directions in which the unwinder of the second roll-to-roll process subsequent to the first roll-to-roll process unwinds the electrodes are the same.

In some exemplary examples, the roll map matching part may be configured to match the roll map of the first roll-to-roll process with the roll map of the second roll-to-roll process while maintaining coordinates in the width direction of the roll map of the second roll-to-roll process when the up and down directions in which a rewinder of the first roll-to-roll process winds the electrodes and the up and down directions in which the unwinder of the second roll-to-roll process subsequent to the first roll-to-roll process unwind the electrodes differ from each other.

In some exemplary examples, the roll map creating system may further comprise a storage device capable of storing lot information including a winding direction of the electrodes.

In some exemplary examples, the electrodes may include two or more lanes arranged in the width direction, and the roll map matching part, may be configured to match the roll map of the first roll-to-roll process with the roll map of the second roll-to-roll process after reversing the order of lanes of the roll map of the first roll-to-roll process in the width direction when the up and down directions in which the rewinder of the first roll-to-roll process winds the electrode and the up and down directions in which the unwinder of the second roll-to-roll process unwinds the electrode are the same.

In some exemplary examples, the electrode may include two or more lanes arranged in the width direction, and the roll map matching part may be configured to match the roll map of the first roll-to-roll process with the roll map of the second roll-to-roll process while maintaining the order of the lanes of the roll map of the first roll-to-roll process in the width direction when the up and down directions in which the rewinder of the first roll-to-roll process winds the electrode and the up and down directions in which the unwinder of the second roll-to-roll process unwinds the electrode are opposite to each other.

In some exemplary examples, the electrode may include two or more lanes arranged in the width direction, and the roll map matching part may be configured to match the roll map of the first roll-to-roll process with the roll map of the second roll-to-roll process while reversing the arrangement order of the lanes and coordinates in the width direction of the roll map of the second roll-to-roll process when the rewinder of the first roll-to-roll process winds the electrode in an upper portion and the unwinder of the second roll-to-roll process unwinds the electrode in an upper portion.

In some exemplary examples, the electrode may include two or more lanes arranged in the width direction, and the roll map matching part may be configured to match the roll map of the first roll-to-roll process with the roll map of the second roll-to-roll process while maintaining the arrangement order of the lanes and coordinates in the width direction of the roll map of the second roll-to-roll process and reversing the top side and back side of the roll map of the second roll-to-roll process when the rewinder of the first roll-to-roll process winds the electrode in an upper portion and the unwinder of the second roll-to-roll process unwinds the electrode in a lower portion.

In some exemplary examples, the electrode may include two or more lanes arranged in the width direction, and the roll map matching part may be configured to match the roll map of the first roll-to-roll process with the roll map of the second roll-to-roll process while maintaining the arrangement order of the lanes and coordinates in the width direction of the roll map of the second roll-to-roll process and reversing the top side and back side of the roll map of the second roll-to-roll process when the rewinder of the first roll-to-roll process winds the electrode in a lower portion and the unwinder of the second roll-to-roll process unwinds the electrode in an upper portion.

In some exemplary examples, the electrode may include two or more lanes arranged in the width direction, and wherein the roll map matching part may be configured to match the roll map of the first roll-to-roll process with the roll map of the second roll-to-roll process while reversing the arrangement order of the lanes and coordinates in the width direction of the roll map of the second roll-to-roll process when the rewinder of the first roll-to-roll process winds the electrode in a lower portion and the unwinder of the second roll-to-roll process unwinds the electrode in a lower portion.

In some exemplary examples, the roll map matching part may be configured to map a starting point of the roll map of the first roll-to-roll process to an end point of the roll map of the second roll-to-roll process.

In some exemplary examples, the roll map matching part may be configured to map an end point of a roll map of the first roll-to-roll process to a starting point of a roll map of the second roll-to-roll process.

Another aspect of the present disclosure is a roll map creating system in a series of roll-to-roll processes, wherein an electrode unwound from an unwinder is processed and then wound by a rewinder, wherein the roll map creating system may include a roll map creating device for creating a roll map for each process, the roll map being defined in a coordinate plane having two coordinate axes, a longitudinal direction axis of the electrode and a width direction axis of the electrode, and wherein a position of the electrode in each process can be represented by a coordinate value in the coordinate plane, wherein the roll map creating device may be configured to create a first roll map for a first roll-to-roll process and a second roll map for a second roll-to-roll process, the first roll-to-roll process preceding the second roll-to-roll process, the roll map creating device including information of a winding aspect of the first roll-to-roll process and an unwinding aspect of the second roll-to-roll process, and wherein the roll map creating device is configured to further create an overlay roll map in which the first roll map and the second roll map are incorporated using the information of the winding aspect of the first roll-to-roll process and the unwinding aspect of the second roll-to-roll process.

In some exemplary examples, the second roll-to-roll process may be performed immediately after the first roll-to-roll process.

In some exemplary examples, the roll map creating device may be configured to match the top side of the first roll map with the top side of the second roll map, and to reverse the arrangement order of the lanes and coordinates in the width direction of the second roll map based on the progress direction of the electrodes to match the lanes of the first roll map when the winding aspect of the first roll-to-roll process and the unwinding aspect of the second roll-to-roll process are identical to each other.

In some exemplary examples, the roll map creating device may be configured to match the top side of the first roll-to-roll device with the back side of the second roll map, and to match the lanes of the second roll map with the lanes of the first roll map while maintaining the width direction arrangement order of the lanes and coordinates in the width direction of the second roll map based on the progress direction of the electrodes when the winding aspect of the first roll-to-roll process and the unwinding aspect of the second roll-to-roll process are different.

Another aspect of the present disclosure is a roll map creating method in a series of sequentially repeating roll-to-roll processes in which an electrode unwound from an unwinder is moved and wound in a rewinder, the method including a step of creating a roll map defined by a coordinate plane having two coordinate axes, a longitudinal direction axis and a width direction axis, of the electrode comprising two or more lanes, and the position of the electrode in each process can be represented as a coordinate value of the coordinate plane, the step of creating the roll map comprising a step of reversing coordinates in a width direction of the roll map of the second roll-to-roll process to match the roll map of the first roll-to-roll process, when the up and down directions in which the preceding rewinder of the first roll-to-roll process winds the electrode and the up and down directions in which the subsequent unwinder of the second roll-to-roll process unwinds the electrode are the same.

In some exemplary examples, the step of creating the roll map may include a step of matching a roll map of the first roll-to-roll process with a roll map of the second roll-to-roll process while maintaining coordinates of a width direction of the roll map of the second roll-to-roll process when the up and down directions in which the rewinder of the first roll-to-roll process winds the electrodes and the up and down directions in which the unwinder of the second roll-to-roll process unwinds the electrodes are different from each other.

In some exemplary examples, the step of creating the roll map may include a step of matching a roll map of the first roll-to-roll process with a roll map of the second roll-to-roll process after reversing the arrangement order of the lanes of the roll map of the first roll-to-roll process in the width direction when the up and down directions in which the rewinder of the first roll-to-roll process winds the electrodes and the up and down directions in which the unwinder of the second roll-to-roll process unwinds the electrodes are identical to each other.

The roll map creating system of the present disclosure has the effect of accurately matching roll maps created in a series of roll-to-roll processes, ensuring traceability of data related to electrodes, enabling accurate analysis and reducing work time.

However, the technical effects that can be obtained in exemplary examples of the present disclosure is not limited to the above-described effects, and other effects not mentioned can be clearly understood by a person skilled in the art from the description of the disclosure described below. In other words, unintended effects of implementing the exemplary examples of the present disclosure may also be derived from the exemplary examples of the present disclosure by a person skilled in the art.

### [Brief Description of the Drawings]

FIG. 1 is a conceptual perspective view schematically illustrating the state of an electrode undergoing an electrode manufacturing process.
FIG. 2 is a conceptual view illustrating a roll map created in an electrode manufacturing process according to an embodiment of the present disclosure.
FIG. 3 is a conceptual diagram illustrating the relationship between two consecutive roll-to-roll processes according to an embodiment of the present disclosure.
FIG. 4 is a schematic conceptual diagram illustrating a particular roll-to-roll process according to an embodiment of the present disclosure.
FIG. 5 is a conceptual diagram illustrating an aspect of mounting a first electrode roll from a first roll-to-roll process to a second unwinder in a second roll-to-roll process.
FIG. 6 is a conceptual diagram illustrating an aspect in which a second electrode roll of the first roll-to-roll process is mounted to a second unwinder in a second unwinder in a second roll-to-roll process.
FIG. 7 is a block diagram illustrating a roll map creating system according to an embodiment of the present disclosure.
FIG. 8 is a schematic diagram conceptually illustrating rules for matching the first roll map and the second roll map with each other.

### [Detailed Description]

Hereinafter, preferred exemplary examples of the present disclosure concept will be described in detail with reference to the accompanying drawings. However, exemplary examples of the present disclosure concept may be modified in various different forms, and it should not be interpreted that the scope of the present disclosure concept is limited by the exemplary examples described below. It is preferred that the exemplary examples of the present disclosure be interpreted as provided to explain the present disclosure more fully to a person skilled in the art. Herein, the same reference numerals may refer to the same elements. In addition, the various elements and areas of the drawings are schematically illustrated. Accordingly, the present disclosure may not be limited by the relative sizes or spacing illustrated in the accompanying drawings.

Terms such as first, second, and the like may be used to describe various components, but the components are not limited by the terms. The terms may be used for the purpose of distinguishing one component from the other component. For example, a first component may be named a second component, and vice versa, a second component may be named a first component, without departing from the scope of the present disclosure concept.

The terms used in the present description are used merely to explain specific exemplary examples and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, should have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and should not to be construed in an excessively formal sense unless explicitly defined herein.

Specific process sequences may be performed differently from the order described when some exemplary examples are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, exemplary examples of the present disclosure should not be construed as limited to the specific forms of the areas shown herein, and should include, for example, variations in form resulting from manufacturing processes. All terms "and/or" used herein are included each and every combination of one or more of the components mentioned.

In addition, as used herein, the term "substrate" can mean the substrate itself, or a stacked structure including the substrate, and a predetermined layer or film formed on the surface thereof. In addition, the term "surface of the substrate" as used herein may refer to an exposed surface of the substrate itself, or to an outer surface of a predetermined layer or film, etc., formed on the substrate.

### (first embodiment)

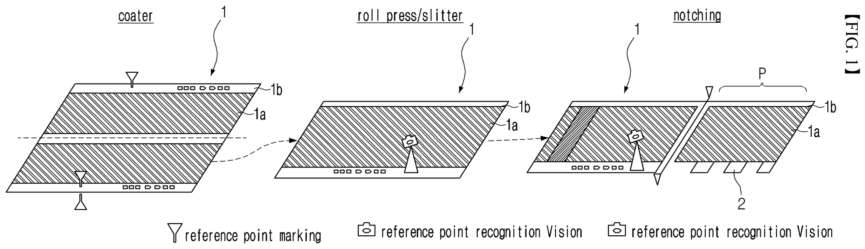

FIG. 1 is a conceptual perspective view schematically illustrating the state of an electrode undergoing an electrode manufacturing process.

Referring to FIG. 1, a coating electrode 1 is manufactured by coating an active material on the overall current collector in a coater C to form a coating part 1a. An uncoated part 1b, which is not coated with the active material, may be marked with a reference point. In some exemplary examples, the active material may be coated on both the top side and the back side of the electrode 1. The coating roll 1 may be pressed by a press roll in a roll pressing process and may be cut along a longitudinal direction of the electrode 1 by a slitter in a slitting process.

Then, in a notching process, the electrode tabs 2 may be formed by punching by a press or the like. In the notching process, the electrode tabs 2 are formed per unit electrode so that they can be cut per unit electrode manufactured into a battery cell, or so that they can be cut in a subsequent process. The width of the unit electrode corresponds to the pitch P processed by the press.

Such an electrode manufacturing process is performed by a series of roll-to-roll processes in which the electrodes unwound from the unwinder are moved and wound in the rewinder, in other words, the electrodes are moved from the unwinder to the rewinder and coated, and the electrodes are wound in the rewinder to complete the electrode roll of the coating process. Next, the electrode roll is mounted on an unwinder of the roll-press process and moves to a rewinder of the roll press process. The electrode roll is wound on the rewinder of the roll-press process and is completed as an electrode roll of the roll-press process. Then, the electrode roll may be unwound from the unwinder of a subsequent process (e.g., a second roll-press process, a slitting process, or a notching process, etc.) and, after a predetermined process, may be wound again on the rewinder of the subsequent process to be completed as an electrode roll of the subsequent process. In this way, the electrode manufacturing process may include a series of roll-to-roll processes in which the electrode rolls unwound from the unwinder are moved and wound in the rewinder (so-called roll-to-roll processes) are repeated sequentially.

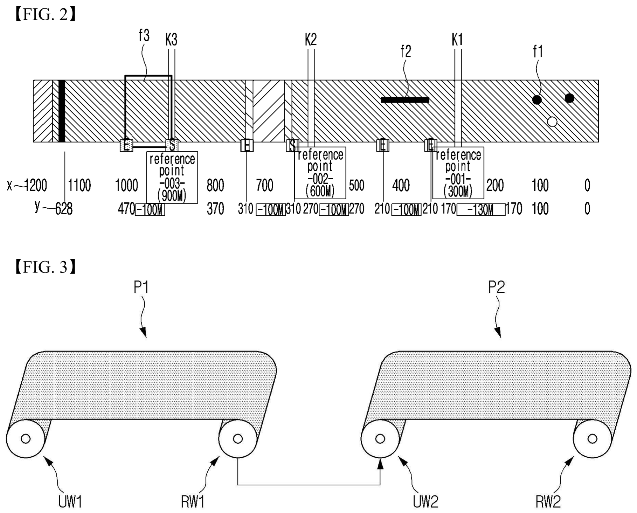

FIG. 2 is a conceptual view illustrating a roll map created in an electrode manufacturing process according to an embodiment of the present disclosure.

As described above, electrodes are progressed in a roll-to-roll method in a coating process, a roll-press process, a slitting process, and the like. A roll map simulating such a progress of the electrode is shown in the bar form, and on the roll map, a longitudinal direction position and a width direction position of the electrode are shown as coordinates, in other words, the roll map is defined on a coordinate plane having two coordinate axes, a longitudinal direction axis and a width direction axis of the electrode, and each position of the electrode on the coordinate plane may be represented by a coordinate value on the coordinate plane. In such a roll map, information regarding defects, quality, electrode breakage, and the like occurring in the electrode manufacturing process is stored along with the coordinates, thereby facilitating visualization of data related to quality or defects in the electrode manufacturing process briefly.

Referring to FIG. 2, information on external defects such as pinhole defects F1 and line defects F2 are visualized and displayed at the coordinates where the defects occurred. In addition, a mismatch part F3 of a coating part and an uncoated part is also shown. Other loading volume defects are also shown, and the part where the electrode was disused at the outermost edge is also shown.

In addition, reference points K1,K2,K3 may be marked on the electrode 1 at predetermined intervals. When a fracture occurs in the electrode 1 and a seam connection member is connected thereto, the electrode length is reduced by the fractured length. As described above, points occurred external defects can also be removed so that the operator can connect them. The roll map may also simulate such a situation and modify the coordinates on the roll map. Referring now to FIG. 2, coordinates that do not reflect the electrode roll removal as described above and coordinates that do are shown together in one roll map. The former may be referred to as the absolute coordinate (x) and the latter as the relative coordinate (y). As shown in FIG. 2, the relative coordinate (y) and the absolute coordinate (x) may be displayed in parallel on a single roll map but may also be represented separately. The roll map labeled with the relative coordinates (y) represents the state of the physical electrode.

Such roll maps may be created for each of the individual processes described above. However, since the electrode wound in the preceding process is unwound in the succeeding process, the beginning and end of the electrode are reversed during the roll-to-roll process, such that the end of the roll map representing the electrode roll of the preceding process becomes the beginning of the roll map representing the electrode roll of the succeeding process. In addition, in the case of a two-side electrode in which the electrode active material is coated on both sides of the electrode, the surface of the electrode may be reversed, such as the top side electrode in the preceding process becoming the back side electrode in the following process. In other words, depending on the winding direction of the electrode in the preceding process and the unwinding direction of the electrode in the following process, the starting point and end point of the electrode may be reversed, and the surface may be reversed. Since the roll maps of each process are created based on these reversed electrodes, the coordinates of the roll maps of each process are also reversed from each other. In addition, the length of the electrode may be changed by cutting and connecting the electrode several times in the longitudinal direction, such as by removing a defective section or a broken section during a series of roll-to-roll processes. The roll maps of each process reflect these reverses and length changes, and thus may have different coordinate values.

At the final stage of the electrode process, only the remaining electrodes (surviving electrodes) are left after excluding the parts of the electrodes removed in the previous process. Since the battery is manufactured with the surviving electrodes, if a problem occurs in a finished or semi-finished battery, the cause of the problem can be traced by referring to the roll map of the final surviving electrodes. In addition, the electrode portion from which the problem is derived can be traced backwards by referring to the roll map of each process described above. As such, the roll map is a useful tool for quality and defect identification as well as quality tracking.

FIG. 3 is a conceptual diagram illustrating the relationship between two consecutive roll-to-roll processes P1, P2 according to an embodiment of the present disclosure.

Referring to FIG. 3, a first roll-to-roll process P1, which is a preceding process, is followed by a second roll-to-roll process P2, which is a following process.

In the first roll-to-roll process P1, an electrode roll unwound from the first unwinder UW1 is rewound in the first rewinder RW1 after undergoing a predetermined processing. The electrodes wound in the first rewinder RW1 are provided to the second unwinder UW2 for a second roll-to-roll process P2. Then, in the second roll-to-roll process P2, the electrode unwound from the second unwinder UW2 is wound again in the second rewinder RW2 after undergoing a predetermined processing.

However, in FIG. 3, the direction in which the electrode is wound in the first rewinder RW1 is shown as an upper winding, but in a specific process, it may be a lower winding. Further, in FIG. 3, the direction in which the electrode is unwound in the second unwinder UW2 is shown as an upper unwinding, but in a specific process, it may be a lower unwinding.

In such a specific process, the winding direction and the unwinding direction may be inconsistent depending on the needs of the preceding process and the following process.

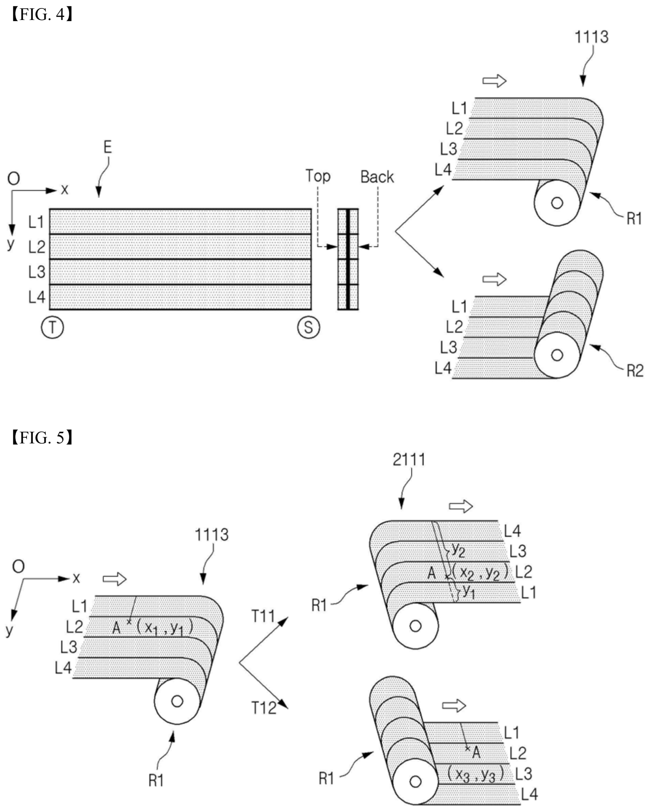

FIG. 4 is a schematic conceptual diagram illustrating a particular roll-to-roll process according to an embodiment of the present disclosure.

Referring to FIG. 4, the electrode E may have two or more lanes. Although the electrode E is shown herein as having four lanes L1, L2, L3, L4, a person skilled in the art will understand that the electrode E may have two, three, five or more lanes.

The electrode E may include a layer of active material on any one or both of the top side and the back side. The electrode E includes a starting point S, which is a point at which it begins to be processed for the roll-to-roll process, and an end point T, which is a point at which processing is completed for the roll-to-roll process. After processed for the roll-to-roll process, the electrode E is wound into a roll, which in some embodiments may be wound in an upper winding method in which the electrode E processed is positioned in an upper portion of the first rewinder 1113 above the center axis of the first rewinder 1113. The roll wound in the upper winding method is hereinafter referred to as the first electrode roll R1.

In other embodiments, the electrodes E being processed may be wound in a lower winding method, wherein the electrodes E are located in a lower portion than the center axis of the first rewinder 1113. The roll wound in the lower winding method is hereinafter referred to as the second electrode roll R2.

In the case of the first electrode roll R1, the top side of the electrode E forms the outer surface of the first electrode roll R1, and in the case of the second electrode roll R2, the back side of the electrode E forms the outer surface of the second electrode roll R2.

As described above, the electrode E can be represented by a roll map on the coordinate plane. In other words, each position in the roll map of the electrode roll E is represented by a coordinate of the longitudinal direction of the electrode (in the direction of the x-axis of FIG. 4) and a coordinate of the width direction (in the direction of the y-axis of FIG. 4). In other words, the roll map is defined on a coordinate plane having two coordinate axes, the longitudinal direction axis of the electrode (in the direction of the x-axis of FIG. 4) and the width direction axis (in the direction of the y-axis of FIG. 4), and each position of the electrode on the coordinate plane may be represented by a coordinate value on the coordinate plane. In such a roll map, information regarding defects, quality, electrode breakage, and the like occurring in the electrode manufacturing process may be stored along with the coordinates, so that data concerning quality or defects in the electrode manufacturing process may be easily visualized at a glance.

FIG. 5 is a conceptual diagram illustrating an aspect in which a first electrode roll R1 wound in an upper portion of a first roll-to-roll process P1 is mounted on a second unwinder 2111 in a second roll-to-roll process P2. Referring to FIG. 5, the first electrode roll R1 is provided to the second unwinder 2111 in the second roll-to-roll process P2 in a subsequent process after being upper wound in the first rewinder 1113.

### Case of upper winding - upper unwinding (T11)

When the first electrode roll R1 is mounted on the second unwinder 2111, the electrode E to be processed may be unwound in the upper winding case (T11), wherein the electrode E is positioned in an upper portion above the center axis of the second unwinder 2111.

In this case, the top side of the first electrode roll R1 in the first roll-to-roll process P1 may be maintained in the second roll-to-roll process P2. However, the lane order and the width direction (i.e., y-axis direction) coordinates in the second roll-to-roll process P2 of the first electrode roll R1 are opposite to the first roll-to-roll process P1. In other words, in the first roll-to-roll process P1, the lanes are arranged as L1, L2, L3, L4 from the left based on the progress direction of the electrode E. On the other hand, in the second roll-to-roll process P2, the lanes are arranged as L1, L2, L3, L4 from the right side based on the progress direction of the electrode E.

Further, in the first roll map created in the first roll-to-roll process P1, the electrode E may be assigned a y coordinate value with the left end as the origin of the width direction (y-axis direction) based on its progress direction. For example, a particular position A on the electrode E may have a position of x1, y1 on the first roll map created in the first roll-to-roll process P1.

In the second roll map created in the second roll-to-roll process P2, the electrode E may be assigned a y coordinate value with the left end as the origin of the width direction (y-axis direction) based on its progress direction. For example, the specific position A on the electrode roll E may have a position of x2, y2 on the second roll map created in the second roll-to-roll process P2.

The y coordinate value of the specific position A on the second roll map, y2, is a value assigned with the left end as the origin based on the progress direction of the electrode E in the second roll-to-roll process P2. However, the origin of the width direction of the first roll map created in the first roll-to-roll process P1 corresponds to the right end based on the direction of advance of the electrode E in the second roll-to-roll process P2, and the distance between the right end and the specific position A is y1. Therefore, the y coordinate value of the specific position A on the second roll map, y2, and the y coordinate value of the specific position A on the first roll map, y1, are summed to equal the overall width of the electrode E. In other words, y2, the y coordinate value of the specific position A on the second roll map, is the overall width of the electrode E minus y1, the y coordinate value of the specific position A on the first roll map. In this respect, the width direction coordinate of the specific position A on the first roll map and the width direction coordinate of the specific position A on the second roll map are reversed (inverted) from each other.

Hereinafter, it may be referred to that the coordinates of the width direction of a particular position of the electrode roll on the first roll map and the coordinates of the width direction of the electrode roll on the second roll map are reversed from each other when the coordinate of the width direction of the particular position of the electrode roll on the first roll map is equal to the width of the electrode roll minus the coordinate of the width direction of the particular position of the electrode roll on the second roll map.

### Case of upper winding - lower unwinding (T12)

When the first electrode roll R1 is mounted on the second unwinder 2111, the electrode E to be processed may be unwound in a lower winding method in which the electrode E is located at a lower portion than the center axis of the second unwinder 2111 T12.

In this case, the top side in the first roll-to-roll process P1 of the first electrode roll R1 becomes the back side in the second roll-to-roll process P2. However, the lane order and width direction (i.e., y-axis direction) coordinates in the second roll-to-roll process P2 of the first electrode roll R1 are the same as in the first roll-to-roll process P1. In other words, the lanes are arranged as L1, L2, L3, L4 from left to right based on the progress direction of the electrode E in the first roll-to-roll process P1 and the second roll-to-roll process P2.

In addition, in the first roll map created in the first roll-to-roll process P1, the electrode E may be assigned a y coordinate value with the left end as the origin of the width direction (y-axis direction) based on its progress direction. For example, a particular position A on the electrode E may have a position of x1, y1 on the first roll map created in the first roll-to-roll process P1.

In the second roll map created in the second roll-to-roll process P2, the electrode E may be assigned a y coordinate value with the left end as the origin of the width direction (y-axis direction) based on its progress direction. For example, the specific position A on the electrode roll E may have a position of x3, y3 on the second roll map created in the second roll-to-roll process P2.

The y coordinate value of the specific position A on the second roll map, y3, is a value assigned with the left end as the origin based on the progress direction of the electrode E in the second roll-to-roll process P2. However, the origin of the width direction of the first roll map created in the first roll-to-roll process P1 is also corresponding to the left end based on the direction of advance of the electrode E in the second roll-to-roll process P2, and y3 and y1 are substantially the same value. In other words, the width direction coordinate of the specific position A on the first roll map and the width direction coordinate of the specific position A on the second roll map are identical to each other. In other words, the width direction coordinate of the specific location A on the first roll map is maintained on the second roll map.

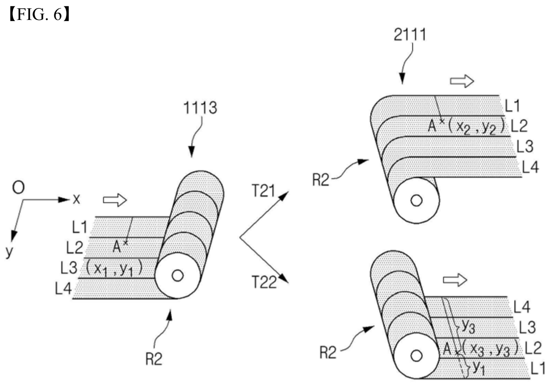

FIG. 6 is a conceptual diagram illustrating an aspect in which a second electrode roll R2 wound in a lower portion of a first roll-to-roll process P1 is mounted on a second unwinder 2111 in a second roll-to-roll process P2. Referring to FIG. 6, the second electrode roll R2 is provided to the second unwinder 2111 in the second roll-to-roll process P2 in a subsequent process after being lower wound in the first rewinder 1113.

### Case of lower winding - upper unwinding (T21).

When the second electrode roll R2 is mounted on the second unwinder 2111, the electrode E may be unwound in an upper winding method (T21) in which the electrode E being processed is positioned in an upper portion above the center axis of the second unwinder 2111.

In this case, the top side in the first roll-to-roll process P1 of the second electrode roll R2 becomes the back side in the second roll-to-roll process P2. However, the lane order and width direction (i.e., y-axis direction) coordinates in in the second roll-to-roll process P2 of the second electrode roll R2 are the same as in the first roll-to-roll process P1. In other words, the lanes are arranged as L1, L2, L3, L4 from left to right based on the progress direction of the electrode E in the first roll-to-roll process P1 and the second roll-to-roll process P2.

In addition, in the first roll map created in the first roll-to-roll process P1, the electrode E may be assigned a y coordinate value with the left end as the origin of the width direction (y-axis direction) based on its progress direction. For example, a particular position A on the electrode E may have a position of x1, y1 on the first roll map created in the first roll-to-roll process P1.

In the second roll map created in the second roll-to-roll process P2, the electrode E may be assigned a y coordinate value with the left end as the origin of the width direction (y-axis direction) based on its progress direction. For example, the specific position A on the electrode roll E may have a position of x2, y2 on the second roll map created in the second roll-to-roll process P2.

The y coordinate value of the specific position A on the second roll map, y2, is a value assigned with the left end as the origin based on the progress direction of the electrode E in the second roll-to-roll process P2. However, the origin of the width direction of the first roll map created in the first roll-to-roll process P1 is also corresponding to the left end based on the direction of advance of the electrode E in the second roll-to-roll process P2, and y2 and y1 are substantially the same value. In other words, the width direction coordinate of the specific position A on the first roll map and the width direction coordinate of the specific position A on the second roll map are identical to each other. In other words, the width direction coordinate of the specific position A on the first roll map is maintained on the second roll map.

### Case of lower winding - lower unwinding (T22)

When the second electrode roll R2 is mounted on the second unwinder 2111, the electrode E may be unwound in a lower winding method (T22) in which the electrode E being processed is located in a lower portion than the center axis of the second unwinder 2111.

In this case, the top side of the second electrode roll R2 in the first roll-to-roll process P1 may be maintained in the second roll-to-roll process P2. However, the lane order and width direction (i.e., y-axis direction) coordinates in the second roll-to-roll process P2 of the second electrode roll R2 are opposite to those in the first roll-to-roll process P1. In other words, in the first roll-to-roll process P1, the lanes are arranged as L1, L2, L3, L4 from the left based on the progress direction of the electrode E. On the other hand, in the second roll-to-roll process P2, the lanes are arranged as L1, L2, L3, L4 from the right side based on the progress direction of the electrode E.

Further, in the first roll map created in the first roll-to-roll process P1, the electrode E may be assigned a y coordinate value with the left end as the origin of the width direction (y-axis direction) based on its progress direction. For example, a particular position A on the electrode E may have a position of x1, y1 on the first roll map created in the first roll-to-roll process P1.

In the second roll map created in the second roll-to-roll process P2, the electrode E may be assigned a y coordinate value with the left end as the origin of the width direction (y-axis direction) based on its progress direction. For example, the specific position A on the electrode roll E may have a position of x3, y3 on the second roll map created in the second roll-to-roll process P2.

The y coordinate value of the specific position A on the second roll map, y3, is a value assigned with the left end as the origin based on the progress direction of the electrode E in the second roll-to-roll process P2. However, the origin of the width direction of the first roll map created in the first roll-to-roll process P1 corresponds to the right end based on the direction of advance of the electrode E in the second roll-to-roll process P2, and the distance between the right end and the specific position A is y1. Therefore, the y coordinate value of the specific position A on the second roll map, y3, and the y coordinate value of the specific position A on the first roll map, y1, are summed to equal the overall width of the electrode E. In other words, y3, the y coordinate value of the specific position A on the second roll map, is the overall width of the electrode E minus y1, the y coordinate value of the specific position A on the first roll map. In this respect, the width direction coordinate of the specific position A on the first roll map and the width direction coordinate of the specific position A on the second roll map are reversed from each other.

As can be seen from the above, depending on the direction in which the electrode roll is wound in the preceding roll-to-roll process and the direction in which the electrode roll is unwound in the following roll-to-roll process, the top side and the back side of the electrode may be switched, and further, the order of arrangement of the lanes of the electrode in the width direction and the width direction coordinates may be changed. Accordingly, the roll map created in the preceding roll-to-roll process and the roll map created in the succeeding roll-to-roll process should be mutually matched in consideration of such changes.

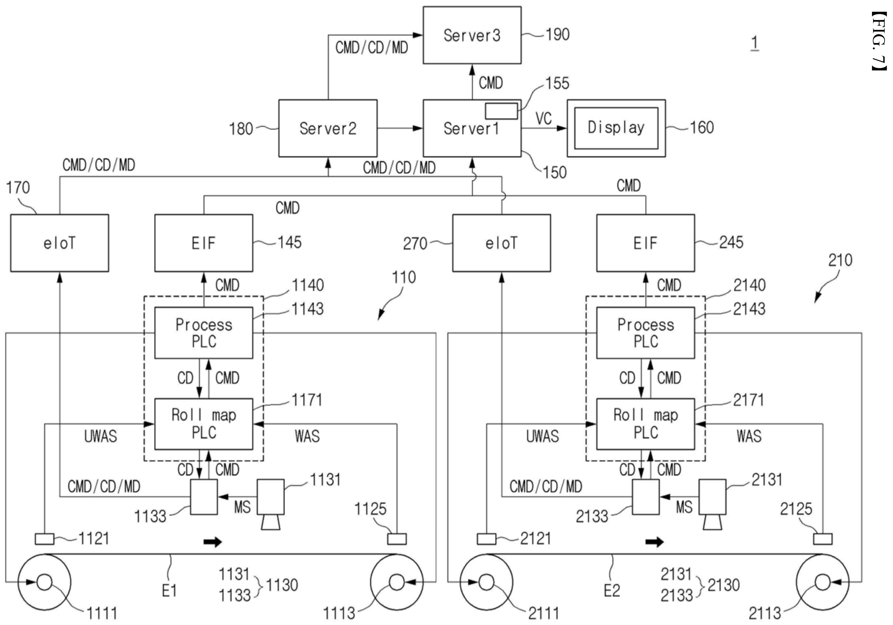

FIG. 7 is a block diagram illustrating a roll map creating system 10 according to an embodiment of the present disclosure.

Referring to FIG. 7, the roll map creating system 10 includes a first roll-to-roll device 110 and a second roll-to-roll device 210. A first roll-to-roll process P1 (refer to FIG. 3) performed on the first roll-to-roll device 110 may be performed continuously with a second roll-to-roll process P2 (refer to FIG. 3) performed on the second roll-to-roll device 210. In particular, the first roll-to-roll process P1 may be performed prior to the second roll-to-roll process P2.

The first roll-to-roll device 110 may include a first unwinder 1111, a first rewinder 1113, a first rotary encoder 1121, a second rotary encoder 1125, a first measuring instrument 1130, and a first process programmable logic controller (PLC) 1143.

The first unwinder 1111 may be provided with electrode rolls to be processed in the first roll-to-roll process P1, and the first unwinder 1111 may be configured to unwind the electrode rolls. A first rewinder 1113 may be configured to unwind the processed electrodes E1 that are ejected from the first unwinder 1111. As previously described, the electrode rolls wound in the first rewinder 1113 may be wound in an upper winding method or a lower winding method.

The first rotary encoder 1121 may be configured to detect the extent to which the electrode E1 has been unwound by the first unwinder 1111. The first rotary encoder 1121 may be configured to be contact or contactless. In some exemplary examples, the first rotary encoder 1121 may be configured to sense the length by which the electrode E1 is unwound by the first unwinder 1111. In response, the first rotary encoder 1121 may be configured to generate an unwinding amount signal (UWAS) representative of the length to which the electrode E1 has been unwound and transmit it to a first roll map PLC 1171 described in more detail hereinafter. The first roll map PLC 1171 may be configured to collect unwinding amount data based on the received unwinding amount signal (UWAS).

The second rotary encoder 1125 may be configured to detect the extent to which electrode E1 has been wound by the first rewinder 1113. The second rotary encoder 1125 may be configured to be contact or contactless. In some exemplary examples, the second rotary encoder 1125 may be configured to sense the length by which the electrode E1 has been wound by the first rewinder 1113. In response, the second rotary encoder 1125 may be configured to generate a winding amount signal (WAS) representative of the length to which the electrode E1 has been wound and transmit it to the first roll map PLC 1171, described in more detail hereinafter. The first roll map PLC 1171 may be configured to collect winding amount data based on the received winding amount signal (WAS).

The first measuring instrument 1130 may be configured to measure the electrode E1 to collect measurement data (MD) of the electrode E1 being transferred from the first unwinder 1111 to the first rewinder 1113. The first measuring instrument 1130 may measure the electrode E1 in a scanning method. In some exemplary examples, the first measuring instrument 1130 may move along a width direction of the electrode E1. In some exemplary examples, during a single scan of the first measuring instrument 1130, the first measuring instrument 1130 may move from one end of the width direction of the electrode E1 to the other end of the width direction. While the first measuring instrument 1130 is performing the scanning in the width direction, the electrode E1 may be moved in a longitudinal direction of the electrode by the first unwinder 1111 and the first rewinder 1113.

The measurement data (MD) may include a test result that is expressed numerically. For example, the measurement data (MD) may include coordinates and dimensions of a notched portion on the electrode E1. In some exemplary examples, the measurement data (MD) may further include loading amount data of the coating material on the electrode, dimensional data such as a width of an insulating material provided on the coating material and an overlap width between the coating material and the insulating material, mismatching data between the coating portion lanes on the upper surface of the electrode and the coating portion lanes on the lower surface of the electrode, etc. Here, the loading amount indicates the amount of coating material loaded per unit area of the electrode E1, which may be an area density of the coating material. The measurement data (MD) may be processed by a set method, such that a positive and negative charge of the measured portion of the electrode may be determined.

The first measuring instrument 1130 may include a first sensing part 1131 and a first processing part 1133. The first sensing part 1131 may be configured to sense a physical quantity of the electrode E1 to generate a measurement signal MS. For example, the first sensing part 1131 may include a time delay and integration (TDI) camera, a complementary metal oxide semiconductor (CMOS) image sensor, a time of flight (TOF) sensor, etc. The first sensing part 1131 may also include an emitter and receiver configured to perform measurements using non-destructive signals, such as ultrasound, microwaves, terahertz waves, infrared light, etc. In some exemplary examples, the first sensing part 1131 may include analog and/or digital sensors, such as biosensors, chemical sensors, composition sensors, current and/or power meters, air quality sensors, gas sensors, hall effect sensors, brightness level sensors, optical sensors, etc. In some exemplary examples, the first measuring instrument 1130 may also include pressure sensors, temperature sensors, ultrasonic sensors, proximity sensors, door status sensors, motion tracking sensors, humidity sensors, visible and infrared sensors, cameras, etc.

The first roll-to-roll device 110 may further include an inspection device configured to inspect the electrode E1 to collect inspection data. The inspection data may include a determination of the quality of a portion of the electrode E1 and process events. For example, the inspection data may include data of an appearance of the electrode collected by an image-based device, such as a machine vision, data of breaks and joints in the electrode, data of a portion of the electrode on which a sampling inspection was performed, data of a portion of the electrode planned to be scrapped, and data of the scrapped portion of the electrode, data on the positive and negative charge of the coating material and the insulating material on the electrode, data of reference points indicating the location of the electrode, and data of defects such as pinhole defects, crater defects, line defects, crack defects, sideling defects, island defects, fold defects, wrinkle defects, indentation defects, and dent defects. The reference points may be formed at predetermined intervals on the electrode, and the location of other elements on the electrode may be located based on the reference points. The inspection device may be any one of a color sensor, a joint sensor, a reference point sensor, a machine vision, and etc.

The measurement data (MD) and inspection data described above may be time series data. The measurement data (MD) and inspection data may be temporally ordered. Temporal ordering is a major characteristic of time series data, in which events are organized in the order in which they occur and arrive for processing. In other words, the measurement data MD) and the inspection data may be stored based on a time point at which the measurement and inspection were performed, and the measurement data (MD) and the inspection data may be related to time. In addition, the measurement data (MD) and inspection data may be related to a position on the electrode identified based on the reference point.

The first processing part 1133 may be configured to collect the measurement signals MS sensed by the first sensing part 1131 to generate the measurement data (MD). The first processing part 1133 may be wired or wirelessly connected to the first sensing part 1131.

The first roll map PLC 1171 may be in operative communication with the first and second rotary encoders 1121, 1125, the first measuring instrument 1130, and additional measuring instruments and inspection devices through a data network, either wired or wirelessly. The data network may be one-way or two-way. The data network may be implemented by a public and/or specialized network using physical channels, Wi-Fi, Bluetooth, and/or other frequency bands. The first and second rotary encoders 1121, 1125, the first measuring instrument 1130, and additional measuring instruments and inspection devices may be configured to collect data from the equipment, work products, semi-finished products, and products within the first roll-to-roll device 110, or to generate signals for collecting data.

The first roll map PLC 1171 may be configured to transmit coordinate data (CD) to the first processing part 1133. The first processing part 1133 may be configured to associate measurement data (MD) with the coordinate data (CD) to generate coordinate-associated measurement data (CMD). In general, the measurement data MD may be processed based on the trigger points. Examples of processing the measurement data (MD) may include storing the measurement data (MD), manipulating the measurement data (MD) (e.g., generating coordinate-associated measurement data (CMD)), and transmitting the measurement data (MD).

As a non-limiting example, a trigger point for processing the measurement data (MD) may be the completion of scanning. For example, the first sensing part 1131 may scan the electrode in a width direction of the electrode, and for each scanning, the measurement data MD may be stored, processed, modulated, and transmitted. In other examples, the trigger point may be the completion of a plurality of scanning, or the completion of a portion of scanning.

The first processing part 1133 may be configured to transmit the coordinate-associated measurement data (CMD) to the first roll map PLC 1171. The first roll map PLC 1171 may be configured to transmit the coordinate-associated measurement data (CMD) to the first process PLC 1143.

The coordinate-associated measurement data (CMD) transmitted to the first process PLC 1143 may be conveyed to the first server 150 through the first process PLC 1143 and the first equipment interface (EIF) 145. The first process PLC 1143 and the first EIF 145 may relay communication of data, including measurement data (CMD), between the first server 150 and the first roll map PLC 1171. However, not limited thereto, the first roll map PLC 1171 may be configured to transmit coordinate-associated measurement data (CMD) directly to the first server 150.

The first process PLC 1143 may be configured to control the operation of the first unwinder 1111 and the first rewinder 1113. The first process PLC 1143 may be configured to generate signals for operating and stopping the first unwinder 1111 and the first the rewinder 1113.

In some exemplary examples, each of the first roll map PLC 1171 and the first process PLC 1143 may be part of one PLC, for example, the first PLC 1140.

For control of the first roll-to-roll process, a communication channel may be installed between the first process PLC 1143 and the first server 150 via the first EIF 145 and connecting the first process PLC 1143 and the first server 150. Accordingly, the data transmission through the first process PLC 1143 may be performed by the first and second rotary encoders 1121, 1125 and the first measuring instrument 1130 directly transmitting the unwinding amount signal (UWAS), winding amount signal (WAS), and measurement signal (MS) to the first server 150, and compared to the case in which the first roll map PLC 1171 directly transmits the measurement data (MD) to the first server 150, the resources needed for the installation of communication channels may be reduced, and the data processing and management may be efficiently performed.

The first EIF 145 may be a device for communication between the first process PLC 1143 of the manufacturing facility and the first server 150, which is an upper server.

In some exemplary examples, the first server 150 may include a first roll map creating part configured to generate a first roll map. The first roll map may be a process data of the electrode E1 on a plane simulating the electrode E1 moving between the first unwinder 1111 and the first rewinder 1113. In this case, the first server 150 may act as a roll map creating device.

In some exemplary examples, the first roll map PLC 1171 may include a first roll map creating part configured to generate the first roll map. In this case, the first roll map PLC 1171 may act as a roll map creating device. Hereinafter, the case in which the first server 150 creates the first roll map will be described. However, the first roll map PLC 1171 may also be configured to create a first roll map in an identical, equivalent, or analogous method to the configuration associated with the first server 150 creating the first roll map.

The first roll map may be generated in a lot unit formed by winding and cutting of the electrode E1. The first roll map may include data on specifications of the lots. The specifications of the lot may include, for example, a lot number, a length of the wound electrode, a winding direction of an electrode roll, an unwinding direction of the electrode roll, a width of the electrode, and a material and composition used in the processing of the electrode.

According to exemplary examples, the first server 150 may be a data processing system that supports various activities necessary to manage the manufacturing of the secondary battery, such as work schedule management, work instructions, quality management, work performance aggregation, and the like. The first server 150 may be, for example, a manufacturing execution system (MES). The first server 150 may be configured to perform input, processing, output, and communication of data needed for the first roll-to-roll process.

The first server 150 may generate a visualization command (VC) for visualizing the first roll map. The first server 150 may convey the visualization command (VC) to the display device 160, and the display device 160 may visualize the first roll map to display the visualized first roll map.

In some exemplary examples, the first processing part 1133 may be configured to convey coordinate-associated measurement data (CMD) and/or coordinate data (CD) to the second server 180.

According to exemplary examples, the coordinate-associated measurement data (CMD) and coordinate data (CD) may be conveyed to the second server 180 via the first eIoT 170. The first eIoT 170 may be a device for communication between the first processing part 1133 and the second server 180.

In some exemplary examples, the second server 180 may be configured to store and process measurement data (MD) of the electrodes. The second server 180 may continuously monitor the processing of the electrodes based on the measurement data MD, thereby managing the quality of the processing of the electrodes. According to exemplary examples, the second server 180 may be a statistical process controller (SPC). By collecting and analyzing manufacturing data nearly in real-time, the second server 180 may timely identify problem conditions and provide alarms to operators before potential problems occur.

The third server 190 may be configured to store coordinate-associated measurement data (CMD) transmitted from the first server 150. The third server 190 may be configured to store measurement data (MD) transmitted from the second server 180. If the first server 150 is an MES and the second server 180 is an SPC, they may be unsuitable for long-term storage of the coordinate-associated measurement data (CMD), evaluation data (ED), and measurement data (MD). The third server 190 may be a data warehouse, for example, and may store the coordinate-associated measurement data (CMD), evaluation data (ED), and measurement data (MD) for a long period of time, such as based on the quality assurance period of a product.

The first processing part 1133, the first roll map PLC 1171, the first process PLC 1143, the first EIF 145, the first server 150, the first eIoT 170, the second server 180, and the third server 190 may be implemented as hardware, firmware, software, and combinations thereof. For example, the first processing part 1133, the first roll map PLC 1171, the first process PLC 1143, the EIF 145, the first server 150, the first eIoT 170, the second server 180, and the third server 190 may include computing devices such as general purpose computers, workstation computers, desktop computers, laptop computers, tablet computers, and the like. The first processing part 1133, the first roll map PLC 1171, the first process PLC 1143, the first EIF 145, the first server 150, the first eIoT 170, the second server 180, and the third server 190 may include any one of simple controllers, complex processors such as microprocessors, CPU, GPU, and the like, processors configured by software, and dedicated hardware and firmware. The first processing part 1133, the first roll map PLC 1171, the first process PLC 1143, the first EIF 145, the first server 150, the first eIoT 170, the second server 180, and the third server 190 may be implemented by, for example, a general purpose processor or application specific hardware such as Digital Signal Processor (DSP), Field Programmable Gate Array (FPGA), and Application Specific Integrated Circuit (ASIC).

The first server 150 and the second server 180 may generate a first roll map and an intermediate roll map. Because the first server 150 stores and processes a lot of data for general manufacturing management other than the first roll map, the first roll map stored on the first server 150 may include processed and simplified coordinate-associated measurement data (CMD) instead of the original measurement data (MD). The second server 180 may store the original measurement data (MD) to operate as an SPC. The second server 180 may transmit measurement data (MD) corresponding to a selected portion of the first roll map in response to a command from the first server 150.

An intermediate roll map may further include the measurement data (MD) associated with the first roll map; in other words, the intermediate roll map may further include, in addition to the first roll map, measurement data (MD) that is the original data. The measurement data (MD) may be associated with the first roll map based on a time value. Accordingly, the intermediate roll map may provide additional insight into the quality of the work product, performance of the process, overall equipment effectiveness (OEE) drill-down, anomaly detection, traceability, preventive maintenance, and predictive alarms.

The first server 150, the second server 180, and the third server 190 may include a physical server or a cloud server. The first server 150, the second server 180, and the third server 190 may provide data and analytics results to an operator through various frameworks. The frameworks may include protocols that support transmitting data so that the display device 160 can visualize the data through a user interface and provide updated visualizations as new data is calculated by the first server 150 and the second server 180.

The protocol supporting transmitting the data may utilize HTML, JavaScript, and/or JSON.

The first server 150, the second server 180, and the third server 190 may include various Application Programming Interface (API) for storing data in databases and other data management tools. The API may also be used for retrieving data from the databases of various data management systems. The data management system may provide access to the database, pull data from the database, retrieve data from the database, and generate metrics. In this context, metrics are tools for visualizing data. Metrics include time-serial generated measurements and may be used to monitor an application and generate status warnings.

The first roll-to-roll device 110 may implement a plug-in architecture with an API for data acquisition to provide plug-and-play connection of the first measuring instrument 1130 and additional measuring instruments and inspection devices. Accordingly, resources at a particular process step and at a particular site may be easily relocated to other processes and other sites, or new resources may be easily introduced at each process step and site.

The data network between the elements of the first roll-to-roll device 110 may include various types of communication channels, including one-way, two-way wired, and wireless communications. In one example, the data network may include an industrial protocol network such as OPC, Modbus, ProfiNet, etc. The communication channels may be dedicated conduit communications such as Universal Serial Bus (USB), IEEE 802 (Ethernet), IEEE 1394 (FireWire), or other high-speed data communication standards.

In some examples, the first roll-to-roll device 110 may further comprise a manual input system that allows an operator to input manufacturing data. The first roll-to-roll device 110 may allow for data input by an operator using an input tool and computer-based input of manufacturing data, such as scraping an excel file.

According to some exemplary examples, the operations of the first processing part 1133, the first roll map PLC 1171, the first process PLC 1143, the first EIF 145, the first server 150, the first eIoT 170, the second server 180, and the third server 190 may be implemented as commands stored on a machine-readable medium that can be read and executed by one or more processors. Here, the machine-readable medium may include any mechanism for storing and/or transmitting information in a form readable by a machine (e.g., a computing device). For example, the machine-readable medium may include Read Only Memory (ROM), Random Access Memory (RAM), magnetic disk storage media, optical storage media, flash memory, electrical, optical, acoustic, or other forms of propagated signals (e.g., carrier waves, infrared signals, digital signals, etc.), and any other signals.

The first processing part 1133, the first roll map PLC 1171, the first process PLC 1143, the first EIF 145, the first server 150, the first eIoT 170, the second server 180, and the third server 190 may comprise firmware, software, routines, and commands for performing the operations described above, or any of the processes described below. For example, the firmware, software, routines, and commands of the first processing part 1133, the first roll map PLC 1171, the first process PLC 1143, the first EIF 145, the first server 150, the first eIoT 170, the second server 180, and the third server 190 may be instantiated in memory.

The first processing part 1133, for example, may include software configured to receive coordinate data (CD), generate coordinate-associated measurement data (CMD), and transmit measurement data (MD), coordinate data (CD), and coordinate-associated measurement data (CMD).

The first roll map PLC 1171, for example, may include software configured to collect coordinate data (CD), receive coordinate-associated measurement data (CMD), and transmit coordinate data (CD) and coordinate-associated measurement data (CMD).

The first process PLC 1143 may include software configured to generate control signals for controlling the first unwinder 1111, the first rewinder 1113, and the notching machine 1115 based on the product ID and the product recipe, receive coordinate data (CD) and coordinate-associated measurement data (CMD), and transmit coordinate data (CD) and coordinate-associated measurement data (CMD).

The first EIF 145 may include software for relaying the transmission of data and information between the first process PLC 1143 and the first server 150. More specifically, the first EIF 145 may include software configured to perform flow control, error control, synchronization, sequence control, addressing, multiplexing, routing, and formatting of communications between the process first PLC 1143 and the first server 150.

The first server 150, for example, may include software configured to convey product ID and product recipes to the first process PLC 1143 and generate a first roll map based on coordinate-associated measurement data (CMD).

The first eIoT 170 may include software configured to collect, store, process, and transmit time series data, coordinate data (CD), and/or coordinate-associated measurement data (CMD), such as measurement data (MD).

The second server 180 may include software configured to store time series data, coordinate data (CD), and/or coordinate-associated measurement data (CMD), such as measurement data (MD), monitor a process based on the time series data, coordinate data (CD), and/or coordinate-associated measurement data (CMD), and transmit the time series data, coordinate data (CD), and/or coordinate-associated measurement data (CMD) in response to a request of the first server 150.

The third server 190 may include software configured to receive and store the coordinate-associated measurement data (CMD), evaluation data (ED), and/or measurement data (MD), and retrieve the coordinate-associated measurement data (CMD), evaluation data (ED), and/or measurement data (MD).

However, this is for ease of description only, and the operations of the first processing part 1133, the first roll map PLC 1171, the first process PLC 1143, the first EIF 145, the first server 150, the first eIoT 170, the second server 180, and the third server 190 described above may be caused by other devices executing computing devices, distributed computing devices, processors, firmware, software, routines and commands, etc.

The second roll-to-roll device 210 may include a second unwinder 2111, a second rewinder 2113, a third rotary encoder 2121, a fourth rotary encoder 2125, a second measuring instrument 2130, and a second process programmable logic controller (PLC) 2143.

The second unwinder 2111 may be provided with electrode rolls to be processed in the second roll-to-roll process P2, and the second unwinder 2111 may be configured to unwind the electrode rolls. A second rewinder 2113 may be configured to wind the processed electrodes E2 that are unwound from the second unwinder 2111. As previously described, the electrode rolls that are unwound from the second unwinder 2111 may be unwound in an upper unwinding method or a lower unwinding method.

The third rotary encoder 2121 may be configured to detect the extent to which the electrode E2 is unwound by the second unwinder 2111. The third rotary encoder 2121 may be configured to be contact or non-contact. In some exemplary examples, the third rotary encoder 2121 may be configured to sense a length by which the electrode E2 is unwound by the second unwinder 2111. Accordingly, the third rotary encoder 2121 may be configured to generate an unwinding amount signal (UWAS) representative of the length to which the electrode E2 is unwound and transmit it to the second roll map PLC 2171 described in more detail hereinafter. The second roll map PLC 2171 may be configured to collect unwinding amount data based on the received unwinding amount signal (UWAS).

The fourth rotary encoder 2125 may be configured to detect the extent to which the electrode E2 is unwound by the second rewinder 2113. The fourth rotary encoder 2125 may be configured to be contact or non-contact. In some exemplary examples, the fourth rotary encoder 2125 may be configured to sense a length by which the electrode E2 is unwound by the second rewinders 2113. Accordingly, the fourth rotary encoder 2125 may be configured to generate a winding amount signal (WAS) representative of the length to which the electrode E2 is wound and transmit it to the second roll map PLC 2171 described in more detail hereinafter. The second roll map PLC 2171 may be configured to collect winding amount data based on the received winding amount signal (WAS).

The second measuring instrument 2130 may be configured to measure the electrode E2 to collect measurement data (MD) of the electrode E2 as it is transferred from the second unwinder 2111 to the second rewinder 2113. The second measuring instrument 2130 may measure the electrode E2 in a scanning method. In some exemplary examples, the second measuring instrument 2130 may move along a width direction of the electrode E2. In some exemplary examples, during a single scanning of the second measuring instrument 2130, the second measuring instrument 2130 may move from one end of the width direction of the electrode E2 to the other end of the width direction. While the second measuring instrument 2130 is performing the scanning in the width direction, the electrode E2 may be moved by the second unwinder 2111 and the second rewinder 2113 in the longitudinal direction of the electrode.

The measurement data (MD) may include a test result that is expressed numerically. In some exemplary examples, the measurement data (MD) may further include loading amount data of the coating material on the electrode, dimensional data such as a width of an insulating material provided on the coating material and an overlap width between the coating material and the insulating material, mismatching data between the coating portion lanes on the upper surface of the electrode and the coating portion lanes on the lower surface of the electrode, etc. Here, the loading amount indicates the amount of coating material loaded per unit area of the electrode E2, which may be an area density of the coating material. The measurement data (MD) may be processed by a set method, such that a positive and negative charge of the measured portion of the electrode may be determined.

The second measuring instrument 2130 may include a second sensing part 2131 and a second processing part 2133. The second sensing part 2131 may be configured to sense a physical quantity of the electrode E2 to generate a measurement signal MS. For example, the second sensing part 2131 may include a time delay and integration (TDI) camera, a complementary metal oxide semiconductor (CMOS) image sensor, a time of flight (TOF) sensor, etc. The second sensing part 2131 may also include an emitter and receiver configured to perform measurements using non-destructive signals, such as ultrasound, microwaves, terahertz waves, infrared light, etc. In some exemplary examples, the second sensing part 2131 may include analog and/or digital sensors, such as biosensors, chemical sensors, composition sensors, current and/or power meters, air quality sensors, gas sensors, hall effect sensors, brightness level sensors, optical sensors, etc. In some exemplary examples, the second measuring instrument 2130 may also include pressure sensors, temperature sensors, ultrasonic sensors, proximity sensors, door status sensors, motion tracking sensors, humidity sensors, visible and infrared sensors, cameras, etc.

The second roll-to-roll device 210 may further include an inspection device configured to inspect the electrode E2 to collect inspection data. The inspection data may include a determination of the quality of a portion of the electrode E2 and process events. For example, the inspection data may include data of an appearance of the electrode collected by an image-based device, such as a machine vision, data of breaks and joints in the electrode, data of a portion of the electrode on which a sampling inspection was performed, data of a portion of the electrode planned to be scrapped, and data of the scrapped portion of the electrode, data on the positive and negative charge of the coating material and the insulating material on the electrode, data of reference points indicating the location of the electrode, and data of defects such as pinhole defects, crater defects, line defects, crack defects, sideling defects, island defects, fold defects, wrinkle defects, indentation defects, and dent defects. The reference points may be formed at predetermined intervals on the electrode, and the location of other elements on the electrode may be located based on the reference points. The inspection device may be any one of a color sensor, a joint sensor, a reference point sensor, a machine vision, and etc.

The measurement data (MD) and inspection data described above may be time series data. The measurement data (MD) and inspection data may be temporally ordered. Temporal ordering is a major characteristic of time series data, in which events are organized in the order in which they occur and arrive for processing. In other words, the measurement data (MD) and the inspection data may be stored based on a time point at which the measurement and inspection were performed, and the measurement data (MD) and the inspection data may be related to time. In addition, the measurement data (MD) and inspection data may be related to a position on the electrode identified based on the reference point.

The second processing part 2133 may be configured to collect the measurement signals MS sensed by the second sensing part 2131 to generate the measurement data (MD). The second processing part 2133 may be wired or wirelessly connected to the second sensing part 2131.

The second roll map PLC 2171 may be in operative communication with the third and fourth rotary encoders 2121, 2125, the second measuring instrument 2130, and additional measuring instruments and inspection devices through a data network, either wired or wireless. The data network may be one-way or two-way. The data network may be implemented by a public and/or specialized network using physical channels, Wi-Fi, Bluetooth, and/or other frequency bands. The third and fourth rotary encoders 2121, 2125, the second measuring instrument 2130, and additional measuring instruments and inspection devices may be configured to collect data from the equipment, work products, semi-finished products, and products within the second roll-to-roll device 210, or to generate signals for collecting data.

The second roll map PLC 2171 may be configured to transmit coordinate data (CD) to the second processing part 2133. The second processing part 2133 may be configured to associate measurement data (MD) with the coordinate data (CD) to generate coordinate-associated measurement data (CMD). In general, the measurement data MD may be processed based on the trigger points. Examples of processing the measurement data (MD) may include storing the measurement data (MD), manipulating the measurement data (MD) (e.g., generating coordinate-associated measurement data (CMD)), and transmitting the measurement data (MD).

As a non-limiting example, a trigger point for processing the measurement data (MD) may be the completion of scanning. For example, the second sensing part 2131 may scan the electrode in a width direction of the electrode, and for each scanning, the measurement data MD may be stored, processed, modulated, and transmitted. In other examples, the trigger point may be the completion of a plurality of scanning, or the completion of a portion of scanning.

The second processing part 2133 may be configured to transmit the coordinate-associated measurement data (CMD) to the second roll map PLC 2171. The second roll map PLC 2171 may be configured to transmit the coordinate-associated measurement data (CMD) to the second process PLC 2143.

The coordinate-associated measurement data (CMD) transmitted to the second process PLC 2143 may be conveyed to the first server 150 through the second process PLC 2143 and the second equipment interface (EIF) 245. The second process PLC 2143 and the second EIF 245 may relay communication of data, including measurement data (CMD), between the first server 150 and the second roll map PLC 2171. However, not limited thereto, the second roll map PLC 2171 may be configured to transmit coordinate-associated measurement data (CMD) directly to the first server 150

The second process PLC 2143 may be configured to control the operation of the second unwinder 2111 and the second rewinder 2113. The second process PLC 2143 may be configured to generate signals for operating and stopping the second unwinder 2111 and the second rewinder 2113.

In some exemplary examples, each of the second roll map PLC 2171 and the second process PLC 2143 may be part of one PLC, for example, the second PLC 2140.

For control of the second roll-to-roll process, a communication channel may be installed between the second process PLC 2143 and the first server 150 via the second EIF 245 and connecting the second process PLC 2143 and the first server 150. Accordingly, the data transmission through the second process PLC 2143 may be performed by the third and fourth rotary encoders 2121, 2125 and the second measuring instrument 2130 directly transmitting the unwinding amount signal (UWAS), winding amount signal (WAS), and measurement signal (MS) to the first server 150, and compared to the case in which the second roll map PLC 2171 directly transmits the measurement data (MD) to the first server 150, the resources needed for the installation of communication channels may be reduced, and the data processing and management may be efficiently performed.

The second EIF 245 may be a device for communication between the second process PLC 2143 of the manufacturing facility and the first server 150, which is an upper server.

In some exemplary examples, the first server 150 may include a second roll map creating part configured to generate a second roll map. The second roll map may be a process data of the electrode E2 on a plane simulating the electrode E2 moving between the second unwinder 2111 and the second rewinder 2113. In this case, the first server 150 may act as a roll map creating device.

In some exemplary examples, the second roll map PLC 2171 may include a second roll map creating part configured to generate the second roll map. In this case, the second roll map PLC 2171 may act as a roll map creating device. Hereinafter, the case in which the first server 150 creates the second roll map will be described. However, the second roll map PLC 2171 may also be configured to create a second roll map in an identical, equivalent, or analogous method to the configuration associated with the first server 150 creating the second roll map.

The second roll map may be generated in a lot unit formed by winding and cutting of the electrode E2. The second roll map may include data on specifications of the lots. The specifications of the lot may include, for example, a lot number, a length of the wound electrode, a winding direction of an electrode roll, an unwinding direction of the electrode roll, a width of the electrode, and a material and composition used in the processing of the electrode.

The first server 150 may be, for example, a manufacturing execution system (MES). The first server 150 may be configured to perform input, processing, output, and communication of data needed for the second roll-to-roll process.

The first server 150 may generate a visualization command (VC) for visualizing the first roll map. The first server 150 may convey the visualization command (VC) to the display device 160, and the display device 160 may visualize the first roll map to display the visualized second roll map.

In some exemplary examples, the second processing part 2133 may be configured to convey coordinate-associated measurement data (CMD) and/or coordinate data (CD) to the second server 180. According to exemplary examples, the coordinate-associated measurement data (CMD) and coordinate data (CD) may be conveyed to the second server 180 via the second eIoT 270. The second eIoT 270 may be a device for communication between the second processing part 2133 and the second server 180.

In some exemplary examples, the second server 180 may be configured to store and process measurement data (MD) of the electrodes. The second server 180 may continuously monitor the processing of the electrodes based on the measurement data MD, thereby managing the quality of the processing of the electrodes. According to exemplary examples, the second server 180 may be a statistical process controller (SPC). By collecting and analyzing manufacturing data real or nearly in real-time, the second server 180 may timely identify problem conditions and provide alarms to operators before potential problems occur.

The second processing part 2133, the second roll map PLC 2171, the second process PLC 2143, the second EIF 245, the first server 150, the second eIoT 270, the second server 180, and the third server 190 may be implemented as hardware, firmware, software, and combinations thereof. For example, the second processing part 2133, the second roll map PLC 2171, the second process PLC 2143, the EIF 145, the first server 150, the second eIoT 270, the second server 180, and the third server 190 may include computing devices such as general purpose computers, workstation computers, desktop computers, laptop computers, tablet computers, and the like. The second processing part 2133, the second roll map PLC 2171, the second process PLC 2143, the second EIF 245, the first server 150, the second eIoT 270, the second server 180, and the third server 190 may include any one of simple controllers, complex processors such as microprocessors, CPU, GPU, and the like, processors configured by software, and dedicated hardware and firmware. The second processing part 2133, the second roll map PLC 2171, the second process PLC 2143, the second EIF 245, the first server 150, the second eIoT 270, the second server 180, and the third server may be implemented by, for example, a general purpose processor or application specific hardware such as Digital Signal Processor (DSP), Field Programmable Gate Array (FPGA), and Application Specific Integrated Circuit (ASIC), etc.

The first server 150 and the second server 180 may generate a second roll map and an intermediate roll map. Because the first server 150 stores and processes a lot of data for general smanufacturing management other than the second roll map, the second roll map stored on the first server 150 may include processed and simplified coordinate-associated measurement data (CMD) instead of the original measurement data (MD). The second server 180 may store the original measurement data (MD) to operate as an SPC. The second server 180 may transmit measurement data (MD) corresponding to a selected portion of the second roll map in response to a command from the first server 150.

An intermediate roll map may further include the measurement data (MD) associated with the second roll map. In other words, the intermediate roll map may further include, in addition to the second roll map, measurement data (MD) that is the original data. The measurement data (MD) may be associated with the second roll map based on a time value. Accordingly, the intermediate roll map may provide additional insight into the quality of the work product, performance of the process, overall equipment effectiveness (OEE) drill-down, anomaly detection, traceability, preventive maintenance, and predictive alarms.

The second roll-to-roll device 210 may implement a plug-in architecture with an API for data acquisition to provide plug-and-play connection of the second measuring instrument 2130 and additional measuring instruments and inspection devices. Accordingly, resources at a particular process step and at a particular site may be easily relocated to other processes and other sites, or new resources may be easily introduced at each process step and site.

The data network between the elements of the second roll-to-roll device 210 may include various types of communication channels, including one-way, two-way wired, and wireless communications. In one example, the data network may include an industrial protocol network such as OPC, Modbus, ProfiNet, etc. The communication channels may be dedicated conduit communications such as Universal Serial Bus (USB), IEEE 802 (Ethernet), IEEE 1394 (FireWire), or other high-speed data communication standards.

In some examples, the second roll-to-roll device 210 may further comprise a manual input system that allows an operator to input manufacturing data. The second roll-to-roll device 210 may allow for data input by an operator using an input tool and computer-based input of manufacturing data, such as scraping an excel file.

According to some exemplary examples, the operations of the second processing part 2133, the second roll map PLC 2171, the second process PLC 2143, the second EIF 245, the first server 150, the second eIoT 270, the second server 180, and the third server 190 may be implemented as commands stored on a machine-readable medium that can be read and executed by one or more processors. Here, the machine-readable medium may include any mechanism for storing and/or transmitting information in a form readable by a machine (e.g., a computing device). For example, the machine-readable medium may include Read Only Memory (ROM), Random Access Memory (RAM), magnetic disk storage media, optical storage media, flash memory, electrical, optical, acoustic, or other forms of propagated signals (e.g., carrier waves, infrared signals, digital signals, etc.), and any other signals.

The second processing part 2133, the second roll map PLC 2171, the second process PLC 2143, the second EIF 245, the first server 150, the second eIoT 270, the second server 180, and the third server 190 may comprise firmware, software, routines, and commands for performing the operations described above, or any of the processes described below. For example, the firmware, software, routines, and commands of the second processing part 2133, the second roll map PLC 2171, the second process PLC 2143, the second EIF 245, the first server 150, the second eIoT 270, the second server 180, and the third server 190 may be instantiated in memory.

The second processing part 2133, for example, may include software configured to receive coordinate data (CD), generate coordinate-associated measurement data (CMD), and transmit measurement data (MD), coordinate data (CD), and coordinate-associated measurement data (CMD).

The second roll map PLC 2171, for example, may include software configured to collect coordinate data (CD), receive coordinate-associated measurement data (CMD), and transmit coordinate data (CD) and coordinate-associated measurement data (CMD).

The second process PLC 2143 may include software configured to generate control signals for controlling the second unwinder 2111, the second rewinder 2113, and the software, receive coordinate data (CD) and coordinate-associated measurement data (CMD), and transmit coordinate data (CD) and coordinate-associated measurement data (CMD).

The second EIF 245 may include software for relaying the transmission of data and information between the second process PLC 2143 and the first server 150. More specifically, the second EIF 245 may include software configured to perform flow control, error control, synchronization, sequence control, addressing, multiplexing, routing, and formatting of communications between the second process PLC 2143 and the first server 150.

The first server 150, for example, may include software configured to convey product ID and product recipes to the second process PLC 2143 and generate a second roll map based on coordinate-associated measurement data (CMD).

The second eIoT 270 may include software configured to collect, store, process, and transmit time series data, coordinate data (CD), and/or coordinate-associated measurement data (CMD), such as measurement data (MD).

The second server 180 may include software configured to store time series data, coordinate data (CD), and/or coordinate-associated measurement data (CMD), such as measurement data (MD), monitor a process based on the time series data, coordinate data (CD), and/or coordinate-associated measurement data (CMD), and transmit the time series data, coordinate data (CD), and/or coordinate-associated measurement data (CMD) in response to a request of the first server 150.

The third server 190 may include software configured to receive and store the coordinate-associated measurement data (CMD), evaluation data (ED), and/or measurement data (MD), and retrieve the coordinate-associated measurement data (CMD), evaluation data (ED), and/or measurement data (MD).

However, this is for ease of description only, and the operations of the second processing part 2133, the second roll map PLC 2171, the second process PLC 2143, the second EIF 245, the first server 150, the second eIoT 270, the second server 180, and the third server 190 described above may be caused by other devices executing computing devices, distributed computing devices, processors, firmware, software, routines and commands, etc.

The first roll map created in the first roll-to-roll process for one electrode roll and the second roll map created in the second roll-to-roll process for one electrode roll need to be matched with each other. In other words, by matching the corresponding positions of the first roll map and the second roll map created for one electrode roll with each other, it is possible to track how a specific position of the electrode roll has changed in successive processes.

However, as described above, depending on the aspect in which one electrode roll is wound in the rewinder of the preceding process and the aspect in which it is unwound in the unwinder of the following process, the generating directions of the first roll map and the second roll map will differ from each other. Therefore, in order to find a position on the second roll map corresponding to a specific position on the first roll map, a lane number and a top side/back side transformation is required according to a predetermined rule.

Here, the winding "aspect" or the unwinding "aspect" may refer to whether the electrode is located in an upper portion or a lower portion than the center axis of the winding rewinder or the unwinding unwinder. Specifically, if the electrode is located on an upper portion than the center axis of the rewinder being wound, the winding aspect is referred to as upper winding. Also, if the electrode is located on a lower portion than the center axis of the rewinder being wound, the winding is referred to as lower winding.

If the electrode is located on an upper portion than the center axis of the unwinder, the unwinding aspect is referred to as upper unwinding. Also, if the electrode is located on a lower portion than the center axis of the unwinder being unwound, the unwinding aspect is referred to as lower unwinding.

The first server 150 includes a roll map matching part 155. The roll map matching part 155 may match the physical electrodes represented by the roll map of the final process (e.g., the second roll-to-roll process P2) of a series of roll-to-roll processes (e.g., the first roll-to-roll process P1 and the second roll-to-roll process P2 performed subsequent thereto) with the respective physical electrodes represented by the roll maps of each process (e.g., the first roll-to-roll process P1) prior to the final process.

In other words, the roll map matching part 155 may be configured to match the first roll map M1 and the second roll map M2 with each other.

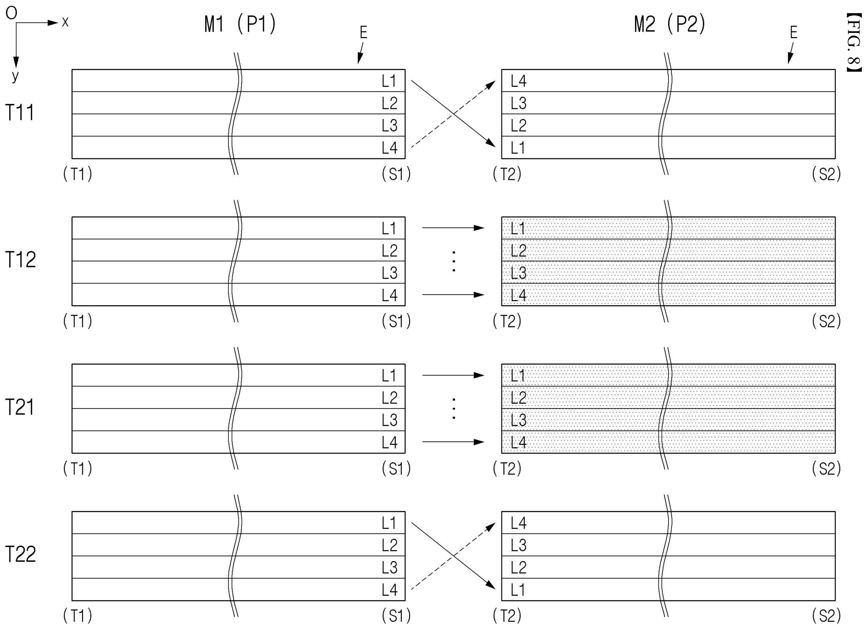

FIG. 8 is a schematic diagram conceptually illustrating rules for matching the first roll map M1 and the second roll map M2 with each other.

Referring to FIG. 8, a relationship between a first roll map M1 created in a first roll-to-roll process P1 and a second roll map M2 created in a second roll-to-roll process P2 for a particular electrode roll is shown.

T11 illustrates a case where the electrode E is upper wound in the first roll-to-roll process P1 and unwound in the second roll-to-roll process P2. As shown, the top side and the back side of the electrode E are not changed in the first roll map M1 and the second roll map M2, but the order of the lanes L1, L2, L3, L4 is reversed. Also, for a particular position on the electrode E, the width direction coordinate (y direction) in the second roll map M2 is reversed and corresponds to the width direction coordinate (y direction) in the first roll map M1.

T12 illustrates a case in which the electrode E is wound in the upper portion in the first roll-to-roll process P1 and unwound in the lower portion in the second roll-to-roll process P2. As shown, the order of the lanes L1, L2, L3, L4 in the first roll map M1 and the second roll map M2 remains unchanged, and the top side and the back side of the electrode E are interchanged, and for a particular position on the electrode E, the width direction coordinate (y direction) in the second roll map M2 is substantially the same as the width direction coordinate (y direction) in the first roll map M1.

T21 illustrates a case in which the electrode E is wound in the lower portion in the first roll-to-roll process P1 and unwound in the upper portion in the second roll-to-roll process P2. As shown, the order of the lanes L1, L2, L3, L4 in the first roll map M1 and the second roll map M2 remains unchanged, and the top side and the back side of the electrode E are interchanged, and for a particular position on the electrode E, the width direction coordinate (y direction) in the second roll map M2 is substantially the same as the width direction coordinate (y direction) in the first roll map M1.

T22 illustrates a case in which the electrode E is lower portion wound in the first roll-to-roll process P1 and lower portion unwound in the second roll-to-roll process P2. As shown, the top side and the back side of the electrode E are not changed in the first roll map M1 and the second roll map M2, but the order of the lanes L1, L2, L3, L4 is reversed, and for a particular position on the electrode E, the width direction (y direction) coordinates in the second roll map M2 are reversed and correspond to the width direction (y direction) coordinates in the first roll map M1.

As shown in FIG. 8, when the winding direction in the first roll-to-roll process P1 and the unwinding direction in the second roll-to-roll process P2 are the same (in other words, upper winding and upper unwinding, or lower winding and lower unwinding), the top side and back side of the electrode are maintained, but the order of the lanes is reversed based on the progress direction of the electrode T11, T22. Further, the width direction (y-direction) coordinates on the first roll map M1 of a particular point on the electrode are reversed and correspond to the width direction (y-direction) coordinates on the second roll map M2.

Also, when the winding direction in the first roll-to-roll process P1 and the unwinding direction in the second roll-to-roll process P2 are different (in other words, upper winding and lower unwinding, or lower winding and upper unwinding), the order of the lanes is maintained based on the progress direction of the electrode, but the top side and the back side of the electrode are reversed T12, T21. In addition, the width direction (y-direction) coordinates on the first roll map M1 of a particular point on the electrode are substantially the same as the width direction (y-direction) coordinates on the second roll map M2.

In FIG. 8, the white surface is a surface that forms a top side in the first roll-to-roll process, and the gray surface is a surface that forms a back side in the first roll-to-roll process.

In either case, the starting point S1 in the first roll map M1 corresponds to the end point T2 in the second roll map M2, and the end point T1 in the first roll map M1 corresponds to the starting point S2 in the second roll map M2. This is because the following process starts from the part where the electrode roll was last wound in the preceding process.

### (second embodiment)

In some exemplary examples, the winding aspect of the relatively preceding first roll-to-roll process and the unwinding aspect of the relatively following second roll-to-roll process may be stored in any one of the first server 150, the second server 180, and the third server 190. In some exemplary examples, the unwinding aspect of the first roll-to-roll process and the unwinding aspect of the second roll-to-roll process may be stored on the first server 150, which is an MES. In some exemplary examples, the first server 150 may further comprise a storage device capable of storing lot information including the winding direction and unwinding direction of the electrode rolls. In some exemplary examples, the storage device may be provided within the roll map matching part 155.

In some exemplary examples, the first server 150 may be configured to read a winding aspect of the first roll-to-roll process P1 and an unwinding aspect of the second roll-to-roll process P2 stored in the first server 150 in order to match the first roll map M1 with the second roll map M2. After reading the winding aspect of the first roll-to-roll process P1 and the unwinding aspect of the second roll-to-roll process P2, the first server 150 may match the corresponding positions according to the rules illustrated in FIG. 8.

In other words, if the winding aspect of the first roll-to-roll process P1 and the unwinding aspect of the second roll-to-roll process P2 are top winding and upper winding, respectively (i.e., the T11 case), the top sides of the first roll map M1 and the second roll map M2 are matched top side to top side, but the coordinates of the order and width direction of the lanes are reversed and matched. At this time, the starting point and the end point of the first roll map M1 are matched to the end point and the starting point of the second roll map M2, respectively.

When the winding aspect of the first roll-to-roll process P1 and the unwinding aspect of the second roll-to-roll process P2 are lower winding and lower unwinding, respectively (in other words, the T22 case), the top sides of the first roll map M1 and the second roll map M2 are matched top side to top side and back side to back side, but the coordinates of the order and width direction of the lanes are reversed and matched. At this time, the starting point and the end point of the first roll map M1 are matched to the end point and the starting point of the second roll map M2, respectively.

If the winding aspect of the first roll-to-roll process P1 and the unwinding aspect of the second roll-to-roll process P2 are upper winding and lower unwinding, respectively (in other words, the T12 case), the top side of the first roll map M1 is matched with the back side of the second roll map M2 and the back side of the first roll map M1 is matched with the top side of the second roll map M2, but the coordinates of the order and width direction of the lanes are the same. At this time, the starting point and the end point of the first roll map M1 are matched to the end point and the starting point of the second roll map M2, respectively.

If the winding aspect of the first roll-to-roll process P1 and the unwinding aspect of the second roll-to-roll process P2 are lower winding and upper winding, respectively (in other words, the T21 case), the top side of the first roll map M1 is matched with the back side of the second roll map M2 and the back side of the first roll map M1 is matched with the top side of the second roll map M2, but the coordinates of the order and width direction of the lanes are the same. At this time, the starting point and the end point of the first roll map M1 are matched to the end point and the starting point of the second roll map M2, respectively.

When the order of the lanes in the first roll map M1 and the second roll map M2 is reversed, the first roll map M1 and the second roll map M2 may be matched such that the lanes arranged from left to right based on the direction in which the electrode advances in the first roll-to-roll process are, in turn, located from right to left based on the direction in which the electrode advances in the second roll-to-roll process.

A coordinate in a longitudinal direction of the first roll map M1 may be correlated with a coordinate in a longitudinal direction of the second roll map M2 in order to match a starting point and an end point of the first roll map M1 to an end point and a starting point of the second roll map M2, respectively. In some exemplary examples, the coordinates in the longitudinal direction of the first roll map M1 and the second roll map M2 may be matched to each other using reference points displayed on the uncoated part 1b (refer to FIG. 1).

As shown above, if the winding direction of the rewinder in the first roll-to-roll process P1 and the unwinder in the second roll-to-roll process P2 are the same as each other (refer to T11 and T22), the first roll map M1 and the second roll map M2 may be matched in such a way that the coordinates of the order of the lanes and the width direction are reversed, while the top side is matched with the back side of the first roll map M1 and the second roll map M2.

When the winding direction of the rewinder in the first roll-to-roll process P1 and the unwinder in the second unwinder process P2 are different from each other (refer to T12 and T21), the first roll map M1 and the second roll map M2 may be matched in such a way that the top side of the first roll map M1 is matched with the back side of the second roll map M2, and the back side of the first roll map M1 is matched with the top side of the second roll map M2, but the coordinates of the order and width direction of the lanes are the same.

In some exemplary examples, the first server 150 may be configured to display the matched information on the display device 160 after matching the first roll map M1 and the second roll map M2. In some exemplary examples, the first server 150 may be configured to further create an overlay roll map in which the first roll map M1 and the second roll map M2 are incorporated into one by matching the first roll map and the second roll map. In some exemplary examples, the first server 150 may be configured to display the roll maps integrated into one by matching the first roll map M1 and the second roll map M2 on the display device 160.

In some exemplary examples, both the first roll map M1 and the second roll map M2 may also include information about the removed portions. In the process of performing the first roll-to-roll process P1 and the second roll-to-roll process P2, electrodes may be partially removed, for example due to defects, and as such, the removed portions of the electrodes may be displayed in both the first roll map M1 and the second roll map M2. The portion that is not removed and remains as a valid portion during the roll-to-roll process is called a surviving electrode portion, and the first roll map M1 and the second roll map M2 may include the surviving electrode portion as well as the removed portion.

Thus, the removal portion of the first roll map M1 is also present as a removal portion in a corresponding portion of the second roll map M2. Also, the survival electrode portion of the second roll map M2 is present as a survival electrode portion in the corresponding portion of the first roll map M1. In some exemplary examples, the surviving electrode portions of the first roll map M1 may be present as removal portions in the corresponding portions of the second roll map M2 in part by being removed in the second roll-to-roll process P2.

As above, although exemplary examples of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of exemplary examples of the present disclosure will not depart from the technology of the present disclosure.

## Claims

1. A roll map creating system for a series of roll-to-roll processes in which an electrode unwound from an unwinder is wound in a rewinder, the roll map creating system comprising:
a roll map creating device for creating a roll map for each process, the roll map being defined in a coordinate plane including a longitudinal direction of the electrode and a width direction of the electrode, and a position of the electrode in each process is represented by a coordinate value of the coordinate plane,
wherein the roll map creating device comprises a roll map matching part for matching a coordinate value of the roll map of each of the processes prior to a final process with a coordinate value of a roll map of the final process, such that the electrode represented by the roll map of the final process is matched with the electrode represented by the roll map of each of the processes prior to the final process in the series of roll-to-roll processes,
wherein the roll map matching part is configured to reverse coordinates in the width direction of a roll map of a second roll-to-roll process to match coordinates in the width direction of a roll map of a first roll-to-roll process when up and down directions in which a rewinder of the first roll-to-roll process winds the electrode and the up and down directions in which an unwinder of the second roll-to-roll process subsequent to the first roll-to-roll process unwinds the electrode are same.

2. The roll map creating system of claim 1, wherein the roll map matching part is configured to match the roll map of the first roll-to-roll process with the roll map of the second roll-to-roll process while maintaining the coordinates in the width direction of the roll map of the second roll-to-roll process when the up and down directions in which the rewinder of the first roll-to-roll process winds the electrode and the up and down directions in which the unwinder of the second roll-to-roll process subsequent to the first roll-to-roll process unwinds the electrode differ from each other.

3. The roll map creating system of claim 2, further comprising a storage device capable of storing lot information including a winding direction of the electrode.

4. The roll map creating system of claim 3, wherein the electrode comprise two or more lanes arranged in the width direction, and
wherein the roll map matching part is configured to match the roll map of the first roll-to-roll process with the roll map of the second roll-to-roll process after reversing an order of lanes of the roll map of the first roll-to-roll process in the width direction when the up and down directions in which the rewinder of the first roll-to-roll process winds the electrode and the up and down directions in which the unwinder of the second roll-to-roll process unwinds the electrode are the same.

5. The roll map creating system of claim 3, wherein the electrode comprises two or more lanes arranged in the width direction, and
wherein the roll map matching part is configured to match the roll map of the first roll-to-roll process with the roll map of the second roll-to-roll process while maintaining an order of the lanes of the roll map of the first roll-to-roll process in the width direction when the up and down directions in which the rewinder of the first roll-to-roll process winds the electrode and the up and down directions in which the unwinder of the second roll-to-roll process unwinds the electrode are opposite to each other.

6. The roll map creating system of claim 1, wherein the electrode comprises two or more lanes arranged in the width direction, and
wherein the roll map matching part is configured to match the roll map of the first roll-to-roll process with the roll map of the second roll-to-roll process while reversing an arrangement order of the lanes and the coordinates in the width direction of the roll map of the second roll-to-roll process when the rewinder of the first roll-to-roll process winds the electrode in an upper portion and the unwinder of the second roll-to-roll process unwinds the electrode in the upper portion.

7. The roll map creating system of claim 1, wherein the electrode comprises two or more lanes arranged in the width direction, and
wherein the roll map matching part is configured to match the roll map of the first roll-to-roll process with the roll map of the second roll-to-roll process while maintaining an arrangement order of the lanes and the coordinates in the width direction of the roll map of the second roll-to-roll process and reversing a top side and back side of the roll map of the second roll-to-roll process when the rewinder of the first roll-to-roll process winds the electrode in an upper portion and the unwinder of the second roll-to-roll process unwinds the electrode in a lower portion.

8. The roll map creating system of claim 1, wherein the electrode includes two or more lanes arranged in the width direction, and
wherein the roll map matching part is configured to match the roll map of the first roll-to-roll process with the roll map of the second roll-to-roll process while maintaining an arrangement order of the lanes and the coordinates in the width direction of the roll map of the second roll-to-roll process and reversing a top side and back side of the roll map of the second roll-to-roll process when the rewinder of the first roll-to-roll process winds the electrode in a lower portion and the unwinder of the second roll-to-roll process unwinds the electrode in an upper portion.

9. The roll map creating system of claim 1, wherein the electrode comprises two or more lanes arranged in the width direction, and
wherein the roll map matching part is configured to match the roll map of the first roll-to-roll process with the roll map of the second roll-to-roll process while reversing an arrangement order of the lanes and the coordinates in the width direction of the roll map of the second roll-to-roll process when the rewinder of the first roll-to-roll process winds the electrode in a lower portion and the unwinder of the second roll-to-roll process unwinds the electrode in the lower portion.

10. The roll map creating system of claim 1, wherein the roll map matching part is configured to map a starting point of the roll map of the first roll-to-roll process to an end point of the roll map of the second roll-to-roll process.

11. The roll map creating system of claim 10, wherein the roll map matching part is configured to map an end point of the roll map of the first roll-to-roll process to a starting point of the roll map of the second roll-to-roll process.

12. A roll map creating system for a series of roll-to-roll processes, wherein an electrode unwound from an unwinder is processed and then wound by a rewinder, the roll map creating system comprising:
a roll map creating device for creating a roll map for each process, the roll map being defined in a coordinate plane including a longitudinal direction of the electrode and a width direction of the electrode, and a position of the electrode in each process is represented by a coordinate value in the coordinate plane,
wherein the roll map creating device is configured to create a first roll map for a first roll-to-roll process and a second roll map for a second roll-to-roll process, the first roll-to-roll process preceding the second roll-to-roll process,
the roll map creating device comprises information of a winding aspect of the first roll-to-roll process and an unwinding aspect of the second roll-to-roll process, and
the roll map creating device is configured to further create an overlay roll map in which the first roll map and the second roll map are incorporated using the information of the winding aspect of the first roll-to-roll process and the unwinding aspect of the second roll-to-roll process.

13. The roll map creating system of claim 12, wherein the second roll-to-roll process is performed immediately after the first roll-to-roll process.

14. The roll map creating system of claim 13, wherein the roll map creating device is configured to match a top side of the first roll map with a top side of the second roll map, and to reverse an arrangement order of the lanes and coordinates in the width direction of the second roll map based on a progress direction of the electrode to match the lanes of the first roll map when the winding aspect of the first roll-to-roll process and the unwinding aspect of the second roll-to-roll process are identical to each other.

15. The roll map creating system of claim 13, wherein the roll map creating device is configured to match a top side of the first roll-to-roll device with a back side of the second roll map, and to match the lanes of the second roll map with the lanes of the first roll map while maintaining a width direction arrangement order of the lanes and coordinates in the width direction of the second roll map based on a progress direction of the electrode when the winding aspect of the first roll-to-roll process and the unwinding aspect of the second roll-to-roll process are different.

16. A roll map creating method for a series of roll-to-roll processes in which an electrode unwound from an unwinder is wound in a rewinder, the method comprising:
creating a roll map defined by a coordinate plane including a longitudinal direction and a width direction of the electrode comprising two or more lanes, and a position of the electrode in each process is represented as a coordinate value of the coordinate plane,
wherein creating the roll map comprises
reversing coordinates in the width direction of a roll map of the second roll-to-roll process to match a roll map of the first roll-to-roll process, when up and down directions in which the rewinder of the first roll-to-roll process winds the electrode and the up and down directions in which the unwinder of the second roll-to-roll process unwinds the electrode are the same.

17. The roll map creating method of claim 16, wherein
creating the roll map comprises
matching the roll map of the first roll-to-roll process with the roll map of the second roll-to-roll process while maintaining coordinates of the width direction of the roll map of the second roll-to-roll process when the up and down directions in which the rewinder of the first roll-to-roll process winds the electrode and the up and down directions in which the unwinder of the second roll-to-roll process unwinds the electrode are different from each other.

18. The roll map creating method of claim 16, wherein creating the roll map comprises
matching the roll map of the first roll-to-roll process with the roll map of the second roll-to-roll process after reversing an arrangement order of the lanes of the roll map of the first roll-to-roll process in the width direction when the up and down directions in which the rewinder of the first roll-to-roll process winds the electrode and the up and down directions in which the unwinder of the second roll-to-roll process unwinds the electrode are identical to each other.
